# EUROPEAN PATENT SPECIFICATION

(11) **EP 1 061 335 B1**
(45) Date of publication and mention of the grant of the patent: **04.10.2006**
(21) Application number: 00111898.3
(22) Date of filing: 13.06.2000
(51) Int. Cl.: G01C 15/00

(54) **Position detecting apparatus**
Positionsdetektionsvorrichtung
Dispositif de détection de position

(30) Priority: 15.06.1999 JP 16903599
(43) Date of publication of application: 20.12.2000
(73) Proprietor: Kabushiki Kaisha TOPCON, Tokyo 174 (JP)
(72) Inventor: Muraoka, Yoshiaki, Tokyo 174 (JP); Musashi, Ryouji, Tokyo 174 (JP); Amanuma, Noboru, Tokyo 174 (JP); Suzuki, Yasuaki, Tokyo 174 (JP); Takahashi, Shoujiro, Tokyo 174 (JP); Sawada, Hidemasa, Tokyo 174 (JP)
(74) Representative: Altenburg, Udo

(56) References cited:
- EP-A- 0 797 076
- EP-A- 0 856 718
- DE-A- 19 733 491

## Description

### BACKGROUND OF THE INVENTION

The present invention relates to a position detecting apparatus for detecting a position of an observation point apparatus and, more particularly, to a position detecting apparatus allowing one-man surveying to be performed effectively.

Conventionally, surveying work has been carried out by using a surveying instrument set up in a datum point and a target of collimation (for example, a corner cube, as a reflecting mirror) set up on the side of the observation point for collimation by the surveying instrument. A modern automated surveying instrument comprises an angle detector for detecting the direction of collimation and a light-wave distance measuring instrument for measuring the distance to the target of collimation. It further comprises a tracking means for detecting and tracking the target of collimation, whereby the worker is enabled to carry out one-man surveying.

In the automated surveying, the worker is positioned on the side of the target of collimation and the target of collimation to be surveyed is moved by the worker himself according to the process of the work. When the target of collimation is moved by the worker, the surveying instrument tracks the target of collimation so that the target of collimation is automatically collimated.

The basic mechanism of the tracking surveying instrument is constituted of a driving mechanism for electrically rotating the collimation direction round a horizontal axis and a vertical axis and a light emitting and detecting portion for detecting the reflecting mirror positioned in the target of collimation. By controlling the driving mechanism such that the reflecting mirror is brought into the center of the photodetecting element of the photodetecting portion, the target of collimation can be tracked automatically.

The tracking light from the light emitting portion is arranged to be emitted in the collimation direction of a telescope and emitted virtually as parallel rays. Further, in order to precisely align the collimation direction with the target of collimation, the photodetecting portion is provided with a photodetecting optical system and frequently the photodetecting portion is provided at the telescope portion.

While automatic tracking is performed in accordance with the movement of the target of collimation, the scope within which the tracking can be made is limited, virtually, to the field of vision of the telescope. Therefore, when the worker moves the target of collimation, if the speed of the movement of the target of collimation is such that is trackable by the surveying instrument, the tracking operation will be performed without difficulty. However, when the speed of movement of the target of collimation is higher than the trackable speed of the surveying instrument, or in such cases that the target of collimation gets out of the field of vision of the telescope or the field of vision is screened temporarily by an obstacle or the like, the surveying instrument loses the target of collimation and becomes unable to continue the tracking. In such an event of the tracking becoming impossible, the surveying instrument is adapted to make virtually one full rotation to search for the target of collimation the same as in the beginning.

Searching for a target of collimation is generally performed by the surveying instrument detecting, while the surveying instrument makes one full rotation, a reflected laser beam that was emitted from the surveying instrument and reflected from the target of collimation.

When a target of collimation is searched for by a conventional surveying instrument, it is necessary for the photodetecting portion to detect a reflected light beam from the target of collimation. However, since the field of vision of the photodetecting portion is small, it is required that the body of the surveying instrument make at least one full rotation while repeating scanning up and down.

Not to mention the collimation made at the initial stage of surveying work, a search for the target of collimation is carried out many times during the course of surveying work for the reasons mentioned above. Therefore, there is a problem with the apparatus of the conventional art that much time is taken for a search for the target of collimation. Accordingly, there has been such a problem that the efficiency in the one-man surveying work is lowered on account of much time taken for searching for the target of collimation.

Therefore, it has been strongly desired that a surveying instrument be provided whereby the target of collimation is quickly detected without the need for rotating the surveying instrument body one full rotation and the target of collimation is searched out in the shortest possible time.

From EP 0 797 076 A2 a surveying system is known comprising a surveying machine which is disposed at a reference point and a signal light projecting device with a reflecting mirror being disposed at a target point. The surveying machine comprises means for detecting a rough direction and a precise direction of the signal light projecting device both using a beam of signal light projected onto the surveying machine from the signal light projecting device. The detecting means cause the surveying direction of the surveying machine to coincide with the target point in accordance with reception of the signal light.

From document EP 0 856 718 A2 a position detection surveying device is known using light emitting means irradiating a target with light which is sector-shaped in an up and down direction and moved in a horizontal direction and light which is sector-shaped in a horizontal direction and moved in an up and down direction to detect a position of a target in accordance with a light reception signal from light receiving means receiving light reflected from the target.

Document DE 197 33 491 A1 discloses a method and apparatus for detecting the position of surveying devices with a surveying machine and a target device, whereby the target device has detection means for detecting fan beams emitted by the surveying machine to make it possible to align the surveying machine with regard to the target device at a target point.

The present invention provides a position detecting apparatus according to claim 1, allowing one-man surveying to be effectively performed.

### BRIEF DESCRIPTION OF THE DRAWINGS

The drawings show an embodiment of the present invention. FIG. 1 shows a surveying instrument according to the embodiment of the invention. FIG. 2 shows an observation point apparatus according to the embodiment of the invention. FIG. 3 shows a structure of the surveying instrument body according to the embodiment of the invention. FIG. 4 shows an electrical structure of the embodiment. FIG. 5 shows an optical structure of the embodiment. FIG. 6 shows a photodetecting element. FIG. 7 is a drawing explanatory of a direction detecting portion. FIG. 8 shows a structure of a fine direction detecting portion. FIG. 9 is a flowchart explanatory of operations performed in the embodiment.

### DESCRIPTION OF THE INVENTION

An embodiment of the invention will be described with reference to the accompanying drawings.

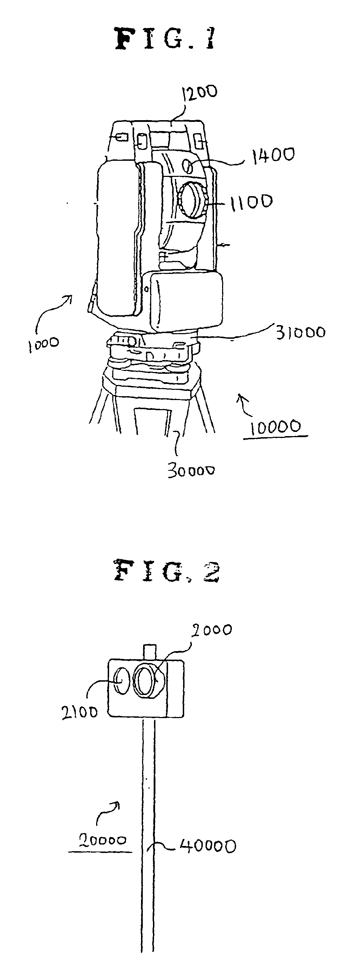

As shown in FIG. 1, the surveying instrument 10000 comprises a base plate portion 31000 attached to a tripod 30000, a surveying instrument body 1000 provided on the base plate portion 31000 for rotation round a vertical shaft axis, a barrel portion 1100 provided on the surveying instrument body 1000 for rotation round a horizontal shaft, and a handle portion 1200 on the surveying instrument body. The surveying instrument body 1000 corresponds to the position detecting apparatus.

The barrel portion 1100 comprises a telescope portion 1300 emitting tracking light for tracking a corner cube 2000 provided on an observation point apparatus 20000 and a fan beam emitting portion 1400 for searching for the corner cube 2000. The telescope portion 1300 comprises a photodetecting portion 1500 detecting the tracking light and the fan beam reflected from the corner cube 2000 for detecting the position thereof. The handle portion 1200 comprises a direction detecting portion 1600 for catching guide light.

The direction detecting portion 1600 corresponds to the guide light detection means.

Here, a guide light emitting portion 2100 of the observation point apparatus 20000 and the direction detecting portion 1600 of the handle portion 1200 constitute a first position detection means A. The fan beam emitting portion 1400, the corner cube 2000, and the photodetecting portion 1500 constitute a second position detection means B. Further, a tracking light emitting portion 1900 of the telescope portion 1300, the corner cube 2000, and the photodetecting portion 1500 constitute a third position detection means C.

As shown in FIG. 2, the observation point apparatus 20000 comprises the corner cube 2000 as a retroreflection mirror and a guide light emitting portion 2100 for emitting the guide light toward the surveying instrument body 1000.

The surveying instrument body 1000 for making distance measurement, angle measurement, and tracking is installed in a known position by means of a tripod 30000. On the other hand, the observation point apparatus 20000 as the target of collimation is erected in the observation point by means of a pole 40000.

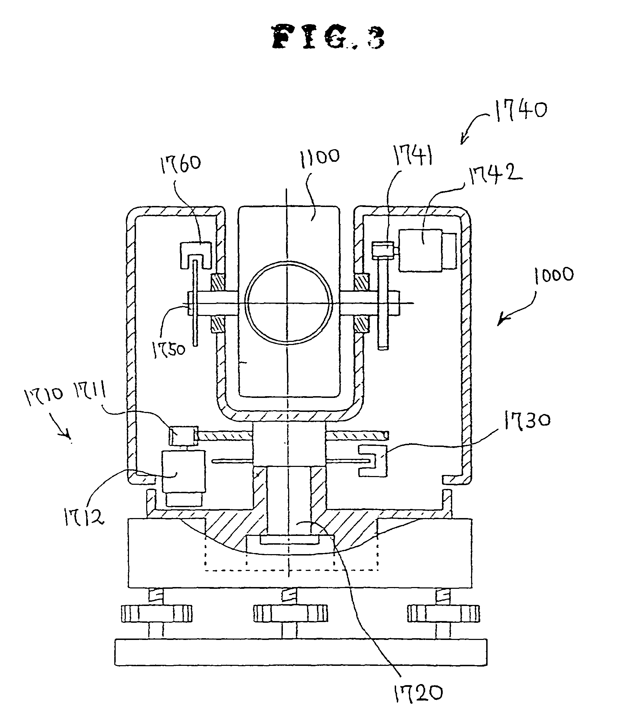

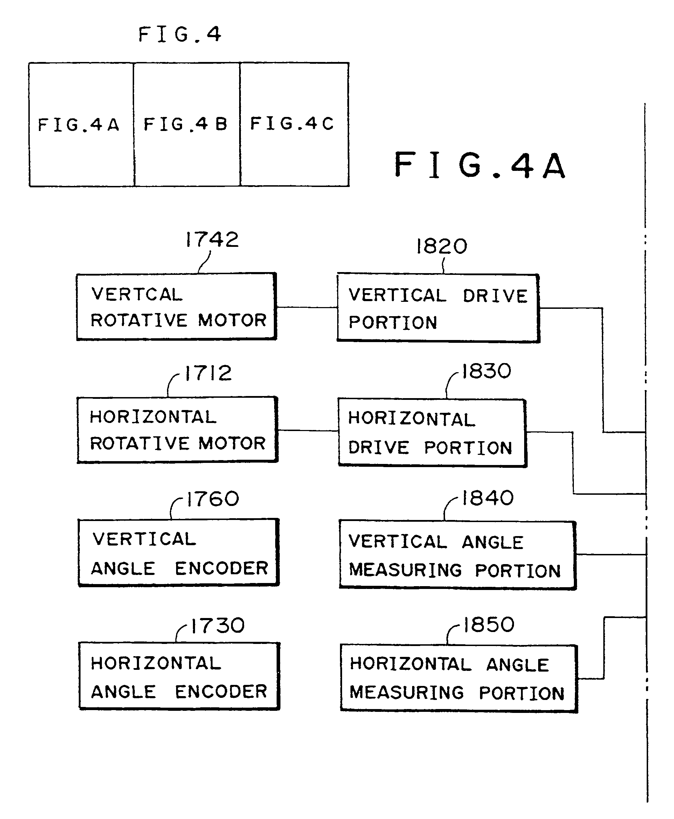

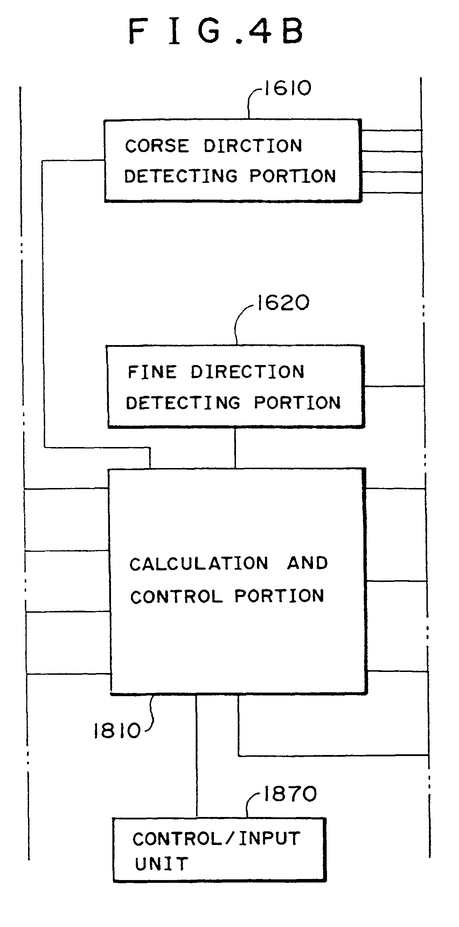

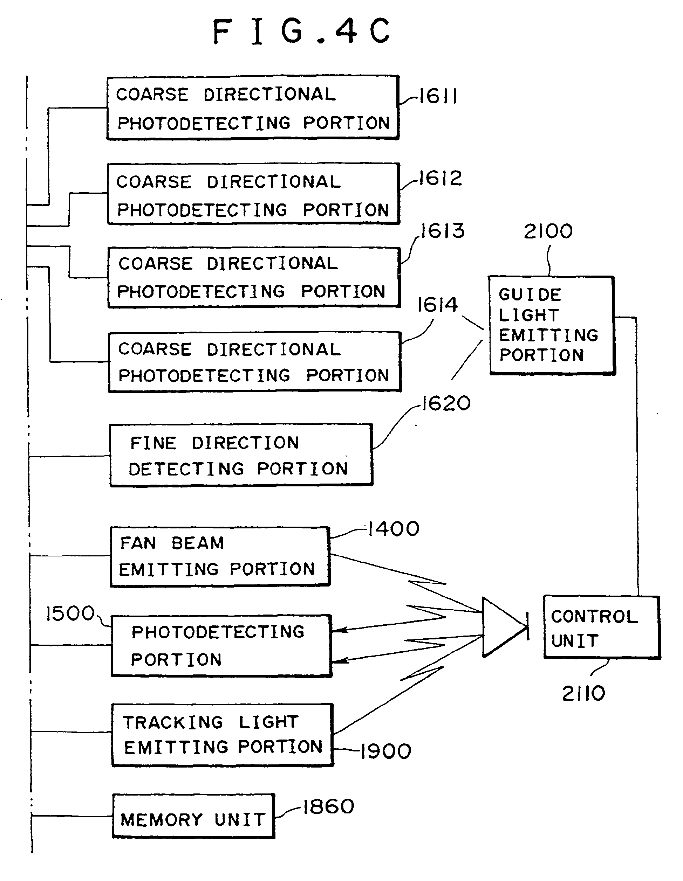

Structure of the surveying instrument body 1000 will be described with reference to FIG. 3 and FIG. 4.

On the surveying instrument body 1000, there is provided a horizontal rotative mechanism 1710 for horizontally turning the surveying instrument body 1000 round a vertical axis. The rotative drive is given by a horizontal rotative motor 1712 through a horizontal rotative drive gear 1711. On the horizontal revolving shaft 1720, there is provided a horizontal revolution angle detector 1730 for detecting the angle of revolution.

In the barrel portion 1100, there is provided a vertical rotative mechanism 1740 for vertically rotating the telescope portion 1300 round a horizontal axis. The rotative drive is given by a vertical rotative motor 1742 through a vertical rotative drive gear 1741. On the vertical revolving shaft 1750, there is provided a tilt angle detector 1760 for detecting the angle of tilt.

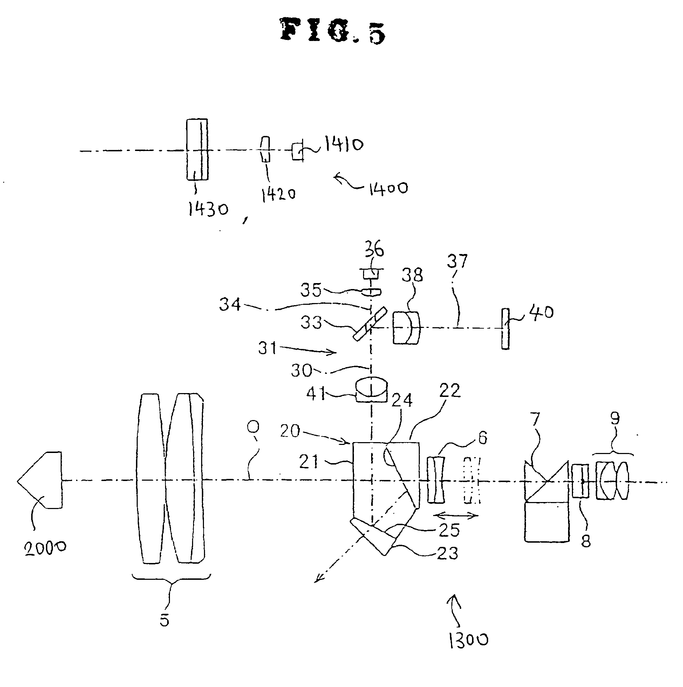

Referring to FIG. 5, the optical arrangement of the fan beam emitting portion 1400 and the telescope portion 1300 will be described. Optical axes of the fan beam emitting portion 1400 and the telescope portion 1300 are arranged in parallel.

The fan beam emitting portion 1400 comprises a beam source 1410 for emitting a laser beam, a relay lens 1420, and a cylindrical lens 1430. A laser beam emitted from the beam source 1410 is changed into parallel rays by the relay lens 1420 and expanded in the horizontal direction by the cylindrical lens 1430 and emitted therefrom.

In order to supplement the range of detection in the tracking, the fan beam emitting portion 1400 has its angle of emission of the fan beam adapted to cover the angle of the field of vision of the telescope portion 1300.

The telescope portion 1300 has an objective lens 5, a focusing lens 6, an erect-image prism 7, a reticle mirror 8, and an eyepiece 9 sequentially arranged on the optical axis O and has a light splitting device, preferably a dichroic prism 20, disposed between the objective lens 5 and the focusing lens 6. The dichroic prism 20 is made up of a prism 21, a prism 22, and a prism 23 to form a first surface 24 and a second surface 25 as dichroic mirror surfaces.

The first surface 24 transmits visible light and reflects infrared radiation of incident reflected light and the second surface 25 transmits distance measurement light and reflects tracking light. A distance measuring optical system (not shown) is provided on the optical axis of the reflected light by the first surface 24 and a tracking optical system 31 is provided on the optical system of the reflected light by the second surface 25.

The first dichroic mirror surface 24 transmits visible light whose wavelength is 400 to 650 nm and reflects infrared radiation whose wavelength is 650 to 850 nm. The second dichroic mirror surface 25 reflects infrared radiation whose wavelength is 650 to 720 and transmits infrared radiation whose wavelength is 720 to 850 nm.

Below will be given the description of the tracking light optical system 31.

A perforated mirror 33 is arranged on the tracking light optical axis 30 and a tracking light source 36 for emitting a tracking laser beam is arranged, through a relay lens 35, on the transmission optical axis 34 of the perforated mirror 33, whereby the tracking light emitting portion is structured. A relay lens 38 and a photodetecting element 40 are arranged on the reflection optical axis 37 of the perforated mirror 33, whereby the photodetecting portion is structured. The photodetecting element 40 is a four-section photodetecting element, for example, and the photodetected position by the photodetecting element 40 is detected according to the ratio between light quantities detected by the sections of the photodetecting element.

The laser beam emitted from the tracking light source 36 is changed into virtually parallel rays by the relay lens 35 and the parallel rays pass through the perforation in the perforated mirror 33. Further, the rays undergo adjustment for degree of expansion by the relay lens 41, turned into virtually parallel beams by means of the dichroic prism 20, and thrown, as tracking light, on the corner cube 2000 through the objective lens 5. Incidentally, the corner cube 2000 concurrently serves as the reflecting mirror of the distance measuring light, the reflecting mirror of the fan beam, and the reflecting mirror of the tracking light.

When the fan beam and the tracking light reflected from the corner cube 2000 are let in again from the objective lens 5, the reflected light is reflected from the first surface 24 and the visible light is transmitted therethrough. The transmitted visible light is focused on the reticle mirror 8 through the focusing lens 6 to be collimated.

The distance measuring light is transmitted through the second dichroic mirror surface 25 and detected by a distance measuring optical system, not shown, whereby distance measurement is performed. Reflected light therefrom is reflected from the perforated mirror 33 and then converged into the photodetecting element 40 through the relay lens 38.

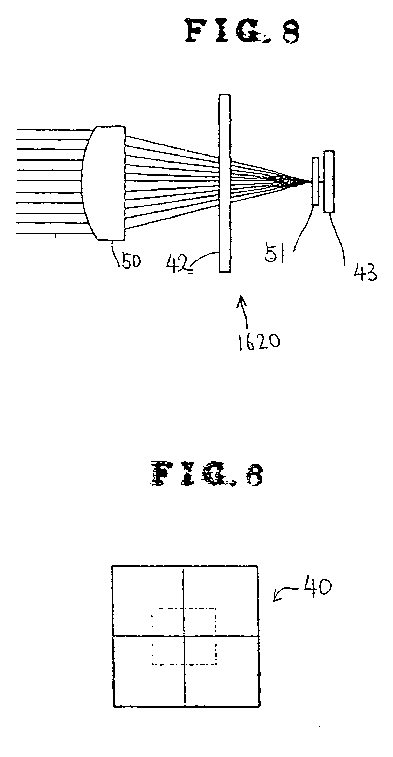

With reference to FIG. 6, the photodetecting surface of the photodetecting element 40 will be described.

The photodetection range indicated by the dot-dash line is the photodetection range of the tracking light. The photodetection range indicated by the full line is the photodetection range of the fan beam. The detected range of the tracking light is narrow because the tracking light is formed of parallel rays. On the other hand, the fan beam covers the expanse of the field of view of the telescope portion 1300.

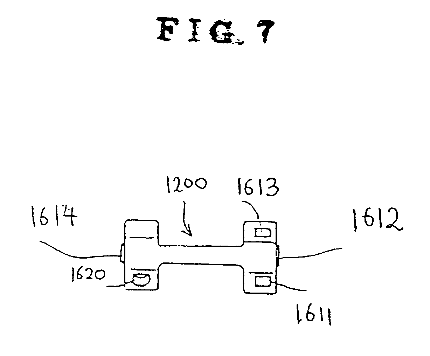

Now, the direction detecting portion 1600 provided on the handle portion 1200 and the guide light emitting portion 2100 provided on the observation point apparatus 20000 will be described with reference to FIG. 7.

The guide light emitting portion 2100 is provided on the observation point apparatus 20000 and controlled by a control unit provided on its back side. Guide light is emitted from the guide light emitting portion 2100 by operation of the control unit when needed.

The guide light is modulated by a suitable circuit so as to be distinguished from noise light and detected and demodulated by the direction detecting portion 1600 of the surveying instrument body 1000. The guide light has a somewhat expanded angle of emission because it is coarsely thrown in the direction of the surveying instrument body 1000. The direction detecting portion 1600 is constituted of a coarse direction detecting portion 1610 and a fine direction detecting portion 1620.

The coarse direction detecting portion 1610 is provided with a first coarse directional photodetecting portion 1611, a second coarse directional photodetecting portion 1612, a third coarse directional photodetecting portion 1613, and a fourth coarse directional photodetecting portion 1614 of the same structure disposed on the four faces of the handle portion 1200 so that the guide light from four horizontal directions can be caught thereby.

Signals from the first coarse directional photodetecting portion 1611, second coarse directional photodetecting portion 1612, third coarse directional photodetecting portion 1613, and the fourth coarse directional photodetecting portion 1614 are input to the coarse direction detecting portion 1610 and the course direction detecting portion 1610, in turn, coarsely detects the direction according to the strengths of the signals from the first coarse directional photodetecting portion 1611, second coarse directional photodetecting portion 1612, third coarse directional photodetecting portion 1613, and the fourth coarse directional photodetecting portion 1614.

Based on the results of detection input to a calculation and control portion 1810, the calculation and control portion 1810 drives, through a vertical drive portion 1820, the vertical rotative mechanism 1740 by means of the vertical rotative motor 1742 to direct the telescope portion 1300 coarsely toward the observation point apparatus 20000.

The fine direction detecting portion 1620 likewise detects the guide light but the range detected thereby is very narrow, i.e., it detects the range of view of the telescope portion 1300 (about ± 1 degree).

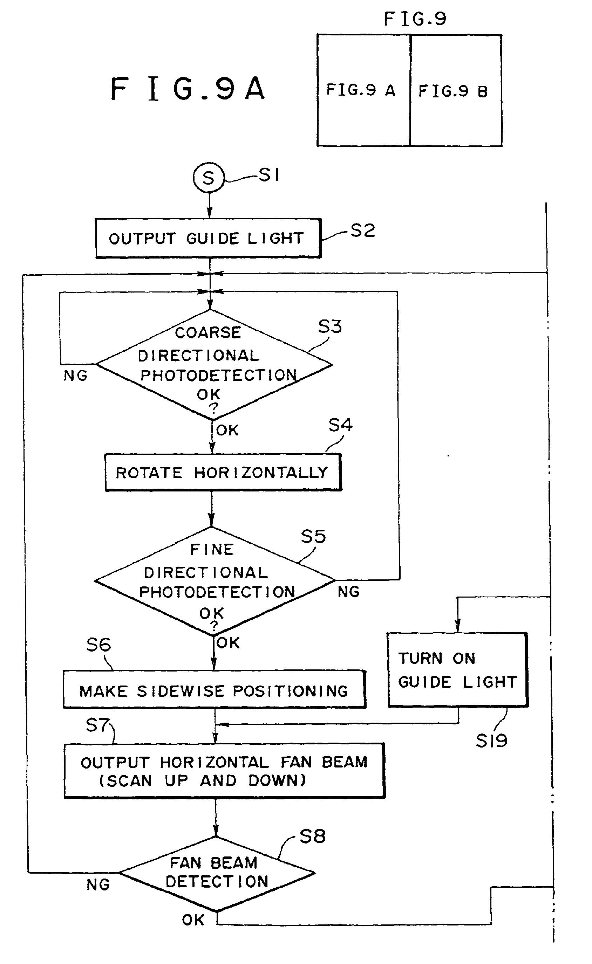

FIG. 8 shows structure of the fine direction detecting portion 1620. The fine direction detecting portion 1620 is made up of a cylindrical lens 50 for converging light to a photosensor 43 in the horizontal direction, a bandpass filter 42 for transmitting special wavelengths, a mask 51 provided with a slit for improving directive photodetection accuracy, and the photosensor 43.

The fine direction detecting portion 1620 is adapted to detect only a narrow range of the guide light in the horizontal direction by means of the slit elongated in the vertical direction. Further, since high photodetecting accuracy cannot be obtained only by the use of the slit, it is adapted such that, while the surveying instrument body 1000 is rotated right and left, the fine direction detecting portion 1620 makes edge detection of the photodetection signal and obtains the center angle from the output at this time of a horizontal angle measuring portion 1850 dependent on the horizontal revolution angle detector 1730, whereupon the calculation and control portion 1810 turns the collimation direction of the surveying instrument body 1000 in the direction of the center angle.

The fan beam emitting portion 1400 is for detecting the observation point apparatus 20000 within the range of view and makes scanning with the barrel portion 1100 rotated up and down.

Upon incidence of the reflected light from the corner cube 2000 on the photodetecting portion 1500, the calculation and control portion 1810, based on the photodetected positions by the four-section photodetecting element 40, calculates the direction from the outputs of the four-section elements constituting the photodetecting element 40. The calculation and control portion 1810 operate the vertical rotative motor 1742 and the horizontal rotative motor 1712 by means of the vertical drive portion 1820 and the horizontal drive portion 1830 so that the reflected light comes into the center of the four-section element.

The tracking light is emitted from the telescope portion 1300 and directed toward the corner cube 2000 provided on the observation point apparatus 20000. The reflected light therefrom is detected by the photodetecting element 40 of the photodetecting portion 1500. The range of detected light is narrower than that of the fan beam. This is because the tracking light is made into virtually parallel rays so that the corner cube 2000 in a remote location is caught by the emitted tracking light. The tracking is made such that the reflected light is in the center of the photodetecting element 40. And, at the moment the reflected light is in the center of collimation, distance and angle measurement is carried out. The results of measurement are stored in a memory unit 1860 of the surveying instrument body 1000.

Otherwise, the results of measurement and the fact that the measurement is ended may be transmitted to the observation point apparatus to be displayed thereon by such means of transmission as modulation of the distance measuring light or tracking light.

The surveying instrument body 1000 detects the reflected luminous flux from the corner cube 2000 to thereby measure the distance to the observation point apparatus 20000.

The observation point apparatus 20000 is provided with the guide light emitting portion 2100 for emitting the guide light for tracking toward the surveying instrument body 1000.

The signals from the first coarse directional photodetecting portion 1611, second coarse directional photodetecting portion 1612, third coarse directional photodetecting portion 1613, and the fourth coarse directional photodetecting portion 1614 are input to the coarse direction detecting portion 1610 and the coarse direction detecting portion 1610, in turn, coarsely detects the direction depending on the strengths of the signals from the first coarse directional photodetecting portion 1611, second coarse directional photodetecting portion 1612, third coarse directional photodetecting portion 1613, and the fourth coarse directional photodetecting portion 1614.

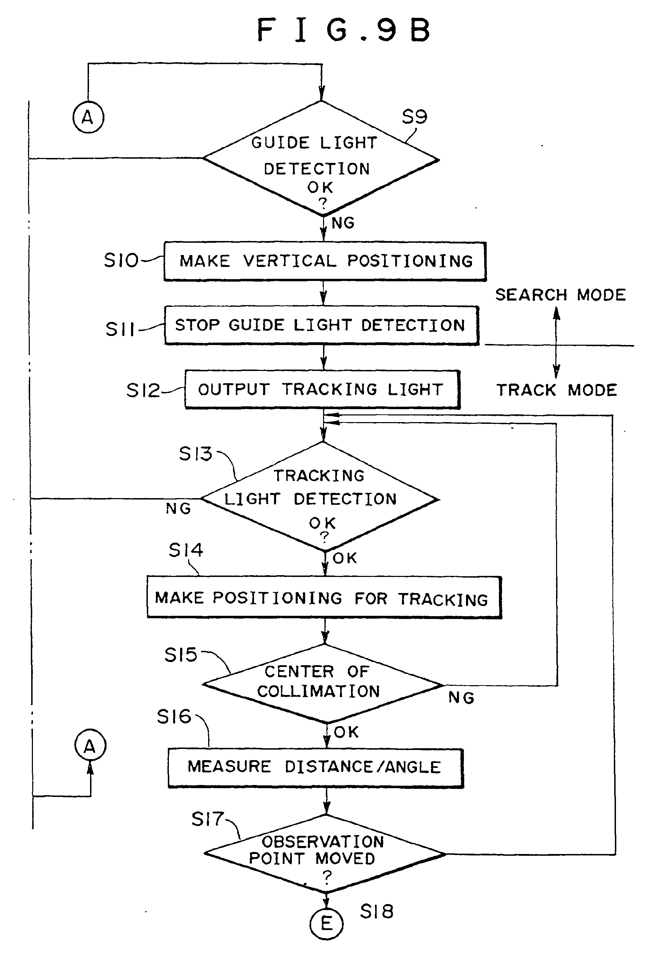

Operations performed in the embodiment will be described with reference to FIG. 9.

First, in the step 1 (hereinafter called S1, etc.), the surveying instrument body 1000 starts its operation. Then, in S2, the operator controls a control unit 2110 to thereby drive the guide light emitting portion 2100 provided on the observation point apparatus 20000 to emit the guide light.

Then, in S3, a search mode is set up and detection of the guide light is started by the coarse direction detecting portion 1610.

There are two modes in the search mode, i.e., a coarse direction search mode and a fine direction search mode. A search for the observation point apparatus 20000 in the coarse direction search mode is first performed . In the coarse direction search mode, the calculation and control portion 1810 allows the photodetection signals of the coarse direction detecting portion 1610 to be received and causes a photodetection signal of the fine direction detecting portion 1620 to be blocked.

The first coarse directional photodetecting portion 1611 of the coarse direction detecting portion 1610 is provided on the same surface as that on which the fine direction detecting portion 1620 is provided, while the second coarse directional photodetecting portion 1612, third coarse directional photodetecting portion 1613, and the fourth coarse directional photodetecting portion 1614 are provided on each of the remaining three surfaces. Accordingly, the guide light from the guide light emitting portion 2100 is detected at least one of the first coarse directional photodetecting portion 1611, second coarse directional photodetecting portion 1612, third coarse directional photodetecting portion 1613, and the fourth coarse directional photodetecting portion 1614.

When detection of light is confirmed in S3, processing advances to S4. In S4, when the confirmed detection of guide light is that achieved only by one of the first coarse directional photodetecting portion 1611, second coarse directional photodetecting portion 1612, third coarse directional photodetecting portion 1613, and the fourth coarse directional photodetecting portion 1614, the calculation and control portion 1810 determines the direction of rotation according to the detection positions, causes the surveying instrument body 1000 to be rotated by means of the horizontal drive portion 1830, and settles the orientation of the surveying instrument body 1000 at the position where the obtained detection signal is only that from the first coarse directional photodetecting portion 1611.

The direction of rotation is given, when the second coarse directional photodetecting portion 1612 is detecting the light, such that the surveying instrument body 1000 is rotated in a counterclockwise direction and, when the fourth coarse directional photodetecting portion 1614 is detecting the light, such that the same is rotated in a clockwise direction. In brief, it is adapted such that only the first coarse directional photodetecting portion 1611 comes to receive the guide light by taking the shortest distance.

When two of the first coarse directional photodetecting portion 1611, second coarse directional photodetecting portion 1612, third coarse directional photodetecting portion 1613, and the fourth coarse directional photodetecting portion 1614 are receiving the guide light, the strengths of the detected light are calculated for comparison in the calculation and control portion 1810. When, for example, there are photodetection signals of both the first coarse directional photodetecting portion 1611 and the second coarse directional photodetecting portion 1612, the detection signals of the first coarse directional photodetecting portion 1611 and the second coarse directional photodetecting portion 1612 are compared to determine which is the larger of the photodetection signals of the photodetecting portions. The rotating direction of the horizontal drive portion 1830 is determined by the calculation and control portion 1810 based on the decision made as to the strengths of the detection signals.

When, for example, the photodetection signal of the first coarse directional photodetecting portion 1611, which is disposed on the same surface on which the photodetecting element 40 is disposed, is the larger of the two, the calculation and control portion 1810 drives the horizontal drive portion 1830 to rotate the surveying instrument body 1000 in the direction in which the photodetection signal of the first coarse directional photodetecting portion 1611 becomes stronger, i.e., in a counterclockwise direction. Also in this case, it is adapted such that only the first coarse directional photodetecting portion 1611 comes to detect the guide light by the rotation taking the shortest distance.

In order to simplify the operating sequence, the surveying instrument body 1000, in the search mode, may be rotated by the horizontal drive portion 1830 in a fixed direction. In this case, the surveying instrument body 1000 may be rotated by the horizontal drive portion 1830 in the predetermined direction and the coarse direction search mode may be switched to the fine direction search mode when the signal from the coarse direction detecting portion 1610 has become only that from the first coarse directional photodetecting portion 1611.

When the coarse direction search mode is completed and the fine direction search mode is about to start, the first coarse directional photodetecting portion 1611 and the observation point apparatus 20000 are facing each other. In this state, the photodetection signals other than that of the first coarse directional photodetecting portion 1611, i.e., those from the second coarse directional photodetecting portion 1612, third coarse directional photodetecting portion 1613, and the fourth coarse directional photodetecting portion 1614 are as small as negligible. Accordingly, the orientation of the surveying instrument body 1000 is at least within a range of ±45 degrees with respect to the correctly collimated state.

Upon completion of the coarse direction search mode up to S4, the fine direction search mode is started in S5.

In the fine direction search mode in S5, the horizontal drive portion 1830 is rotated back and forth within a range of ±45 degrees. The calculation and control portion 1810 takes in the signal from the photodetecting element 40 and blocks the signals from the coarse direction detecting portion 1610. The guide light is adapted to be let in during the course of rotation of the surveying instrument body 1000 through the cylindrical lens 41.

The calculation and control portion 1810 calculates the peak value of the photodetection signal of the photodetecting element 40 or calculates the position of the center of gravitation of the entire photodetection signal. The peak value or the position of gravitation of the photodetection signal indicates the state where the direction of the optical axis of the telescope portion 1300 and the direction of the optical axis of the observation point apparatus 20000 are aligned with each other. The calculation and control portion 1810 takes in the angular signal of the horizontal angular encoder 1730 at the peak value or the position of gravitation of the photodetection signal and determines the horizontal angle in which the telescope portion 1300 is accurately collimated to the observation point apparatus 20000.

Upon decision of the horizontal angle, processing advances to S6. In S6, the calculation and control portion 1810 causes the horizontal drive portion 1830 to rotate the surveying instrument body 1000 such that the detected angle of the horizontal angle encoder 1730 concurs with the determined angle. Namely, in S6, horizontal positioning of the surveying instrument body 1000 is performed.

When fine directional photodetection cannot be made in S5, processing is adapted to return to S3.

In S7, a fan beam is emitted from the fan beam emitting portion 1400 and the barrel portion 1100 is rotated up and down to make a scan.

Further, in S8, the photodetecting portion 1500 detects the fan beam reflected from the corner cube 2000 provided on the observation point apparatus 20000. When the fan beam is confirmed in S8, processing advances to S9 and it is confirmed therein that the detected light by the photodetecting portion 1500 is not the guide light.

When the photodetecting portion 1500 is unable to confirm the fan beam in S8, processing is adapted to return to S3. In the present embodiment, it is arranged such that processing returns to S3 when the fan beam cannot be confirmed within a period of 15 seconds in S8.

When it is confirmed that the detected light by the photodetecting portion 1500 is not the guide light, processing advances to S10. In S10, vertical positioning of the telescope portion 1300 is made by the vertical rotative mechanism 1740 and thereby the telescope portion 1300 can be collimated in the direction of the corner cube 2000 provided on the observation point apparatus 20000.

When the detected light by the photodetecting portion 1500 is confirmed to be the guide light in S9, processing returns to S3.

When the vertical positioning is completed in S10, processing advances to S11 and, therein, detection of the guide light is ended.

Upon completion of the collimation, processing advances to S12, in which the operating mode of the surveying instrument body 1000 is switched to the tracking mode. In S12, tracking light is emitted from the tracking light source 36.

In S13, the photodetecting portion 1500 detects the reflected light by the corner cube 2000 provided on the observation point apparatus 20000.

In S14, positioning for achieving the tracking is made by controlling to drive the vertical rotative mechanism 1740 and the horizontal rotative mechanism 1710.

When the tracking light cannot be detected in S13, processing advances to S19, wherein the guide light is output again, and then returns to S8.

The photodetecting element 40 is able to detect the tracking light within a horizontal angle of ±1 degree of the telescope portion 1300. Therefore, when the observation point apparatus 20000 moves so as not to deviate from the horizontal angle of ±1 degree, the surveying instrument body 1000 tracks the observation point apparatus 20000 and have the collimation quickly completed.

In S15, tracking is further made such that the reflected light comes into the center of the photodetecting element 40. In S16, while the reflected light is positioned in the center of collimation, distance and angle measurement is carried out.

If the reflected light is not in the center of collimation in S15, processing is returned to S13 .

When the observation point apparatus 20000 is moved in S17, processing returns to S13 and then the tracking mode is repeated. When it is unnecessary to move the observation point apparatus 20000, processing advances to S18 and the surveying work is ended therein.

In the present invention arranged as described above, since the guide light detection means of the first position detection means A is adapted to detect the guide light from the guide light emitting portion provided on the observation point apparatus, the fan beam emitting portion of the second position detection means B is adapted to emit the fan beam toward the observation point apparatus and the photodetecting portion is adapted to detect the reflected light by the observation point apparatus, and the tracking light emitting portion of the third position detection means C is adapted to emit the tracking light toward the observation point apparatus, and further since the calculation and control portion is enabled to turn the position detecting apparatus toward the observation point apparatus on the basis of the detection signals of the above position detection means, such an excellent effect is obtained that one-man surveying can be effectively carried out.

## Claims

1. A position light detecting apparatus (1000) for detecting the position of an observation point apparatus (20000) set up in a point to be measured comprising:
first position detection means (A) constituted of guide light detection means (1600) for detecting guide light from a guide light emitting portion (2100) provided on said observation point apparatus (20000);
second position detection means (B) constituted of a fan beam emitting portion (1400) for emitting a fan beam moved up and down to make a scan toward said observation point apparatus (20000) and a photodetecting element (40) for detecting reflected light from said observation point apparatus (20000);
third position detection means (C) constituted of a tracking light emitting portion (1300) for emitting tracking light toward said observation point apparatus (20000) and said photodetecting element (40); and
a calculation and control portion (1810) for controlling rotation means for turning the collimation center of said position detecting apparatus (1000) toward said observation point apparatus (20000) based on detection signals of said first position detection means (A), second position detection means (B) and third position detection means (C);
wherein said photodetecting element (140) for detecting said fan beam is the same as said photodetecting element (40) for detecting said tracking light beam.

2. A position detecting apparatus according to claim 1, wherein said guide light detection means (1600) includes a coarse direction detecting portion (1610) and a fine direction detecting portion (1620).

3. A position detecting apparatus according to claim 2, wherein said coarse direction detecting portion (1610) is made up of a plurality of photodetecting portions (1611, 1612, 1613, 1614) for detecting guide light incident thereon at least from the horizontal direction and detects the coarse direction depending on the strength of the received signals.

4. A position detecting apparatus according to claim 1, wherein said rotation means is made up of a horizontal rotative mechanism (1710) and a vertical rotative mechanism (1740).

## Patentansprüche

1. Positionslichtdetektionsvorrichtung (1000) zum Detektieren der Position einer Beobachtungspunktvorrichtung (20000), aufgestellt in einem Punkt, der vermessen werden soll, aufweisend:
erste Positionsdetektionsmittel (A), gebildet aus einem Führungslichtdetektionsmittel (1600) zum Detektieren eines Führungslichts von einem Führungslichtaussendeabschnitt (2100), vorgesehen an der Beobachtungspunktvorrichtung (20000);
zweite Positionsdetektionsmittel (B), gebildet aus einem Fächerstrahlemissionsabschnitt (1400) zum Emittieren eines Fächerstrahls, welcher nach oben und unten bewegt wird, um eine Abtastung in Richtung der Beobachtungspunktvorrichtung (20000) vorzunehmen, und ein Fotodetektionselement (40) zum Detektieren von reflektiertem Licht von der Beobachtungspunktvorrichtung (20000);
dritte Positionsdetektionsmittel (C), gebildet aus einem Verfolgungslichtemissionsabschnitt (1300) zum Emittieren eines Verfolgungslicht zu der Beobachtungspunktvorrichtung (20000), und dem Fotodetektionselement (40); und
einen Berechnungs- und Steuerabschnitt (1810) zum Steuern von Rotationsmitteln zum Drehen des Kollimationszentrums der Positionsdetektionsvorrichtung (1000) zu der Beobachtungspunktvorrichtung (20000), basierend auf Detektionssignalen der ersten Positionsdetektionsmittel (A), der zweiten Positionsdetektionsmittel (B) und der dritten Positionsdetektionsmittel (C);
wobei das Fotodetektionselement (40) zum Detektieren des Fächerstrahls das gleiche ist, wie das Fotodetektionselement (40) zum Detektieren des Verfolgungslichtstrahls.

2. Positionsdetektionsvorrichtung nach Anspruch 1, wobei die Führungslichtdetektionsmittel (1600) einen Detektionsabschnitt für die grobe Richtung (1610) und einen Detektionsabschnitt für die feine Richtung (1620) aufweisen.

3. Positionsdetektionsvorrichtung nach Anspruch 2, wobei der Detektionsabschnitt für die grobe Richtung (1610) aus einer Mehrzahl von Fotodetektionsabschnitten (1611, 1612, 1613, 1614) aufgebaut ist, zum Detektieren von Führungslicht, welches darauf fällt, zumindest von der horizontalen Richtung, und die grobe Richtung detektiert in Abhängigkeit von der Stärke der empfangenen Signale.

4. Positionsdetektionsvorrichtung nach Anspruch 1, wobei die Drehmittel aufgebaut sind aus einem horizontalen Drehmechanismus (1710) und einem vertikalen Drehmechanismus (1740).

## Revendications

1. Dispositif (1000) de détection d'une lumière de position pour détecter la position d'un dispositif de point d'observation (20000) installé en un point devant être mesuré, comprenant:
des premiers moyens (A) de détection de position constitués par des moyens (1600) de détection d'une lumière de guidage pour détecter une lumière de guidage provenant d'une partie (2100) d'émission de la lumière de guidage, prévue sur ledit dispositif de point d'observation (20000);
des seconds moyens (B) de détection de position constitués par une partie (1400) d'émission d'un faisceau en éventail pour émettre un faisceau en éventail soulevé et abaissé de manière à exécuter un balayage en direction du dispositif de point d'observation (20000) et un élément de photodétection (40) pour détecter une lumière réfléchie provenant dudit dispositif de point d'observation (20000);
des troisièmes moyens (C) de détection de position constitués par une partie (1300) d'émission de lumière de suivi pour l'émission d'une lumière de suivi en direction dudit dispositif de point d'observation (20000) et dudit élément photodétecteur (40); et
une partie de calcul et de commande (1810) pour commander des moyens de rotation pour tourner le centre de collimation dudit dispositif de détection de position (1000) en direction dudit dispositif de point d'observation (20000) sur la base de signaux de détection desdits premiers moyens (A) de détection de position, lesdits seconds moyens (B) de détection de position et lesdits troisièmes moyens (C) de détection de position;
dans lequel ledit élément de photodétection (40) servant à détecter ledit faisceau en éventail est identique audit élément de photodétection (40) servant à détecter ledit faisceau de lumière de suivi.

2. Dispositif de détection de position selon la revendication 1, dans lequel lesdits moyens (1600) de détection de la lumière de guidage incluent une partie (1610) de détection de direction approximative et une partie (1620) de détection de direction précise.

3. Dispositif de détection de position selon la revendication 1, dans lequel ladite partie (1610) de détection de direction approximative est constituée par une pluralité de parties de photodétection (1611, 1612, 1613, 1614) pour détecter une lumière de guidage qui rencontre ces parties, au moins à partir de la direction horizontale, et détecte la direction approximative en fonction de l'intensité des signaux reçus.

4. Dispositif de détection de position selon la revendication 1, dans lequel lesdits moyens de rotation sont constitués par un mécanisme rotatif horizontal (1710) et par un mécanisme rotatif vertical (1740).
